# EUROPEAN PATENT SPECIFICATION

(11) **EP 0 904 688 B1**
(45) Date of publication and mention of the grant of the patent: **26.11.2003**
(21) Application number: 98203182.5
(22) Date of filing: 22.09.1998
(51) Int. Cl.: A01J 5/013

(54) **Milking installation**
Melkanlage
Installation de traite

(30) Priority: 26.09.1997 NL 1007140
(43) Date of publication of application: 31.03.1999
(73) Proprietor: Idento Electronics B.V., 8316 PV Marknesse (NL)
(72) Inventor: Cöp, Jacobus Petrus Hendrikus, 8521 KS St. Nicolaasga (NL); Giesen, Jurgen Gregorius Josephus Henricus, 8317 PK Kraggenburg (NL); Heijdra, Cornelis Leonardus Maria, 8081 MD Elburg (NL)
(74) Representative: 't Jong, Bastiaan Jacob

(56) References cited:
- EP-A- 0 137 367
- EP-A- 0 534 564
- DD-A- 221 635
- GB-A- 2 257 008

## Description

The present invention relates to an installation for milking livestock.

Such an installation is known from the patent application DD 221635 wherein such a measuring device comprises a passage for the main flow of milked milk and a chamber for measurements next thereto, wherein electrodes are arranged in the chamber to perform a measurement as sensor in order to determine the conductivity of the milk. On the basis of these measurement results it is possible to assess for instance whether one of the quarters or perhaps a plurality of the quarters of the udder of the cow has developed mastitis. Further, milk in the chamber has to re-enter the main-flow through the entrance of the chamber, i.e. an overflow construction.

Another prior art of disclosed in EP-A-0.137.367, which discloses a passage and a measurement chamber next thereto, where a relatively large portion of the main flow of milk through the conduit, that interconnects the milk cup and the measuring device, is diverted into the measurement chamber thereof.

A drawback of the known art is that turbulences in the flow, both in the main flow and as a result in the chamber, cause unintended fluctuations in the measurement result obtained with the measuring device. These fluctuations make the obtained measurement result unreliable and there is the danger as such of a diagnosis being made that a cow for milking may or may not be healthy, which may then be incorrect. Moreover, in an overflow construction milk from previously milked cows may affect a measurement at a later time, thereby endangering the correctness of the obtained results.

The invention has for its object to at least diminish and preferably obviate the above stated drawback, and an installation is provided for this purpose which is distinguished by the features of claim 1.

As a result thereof the occurrence of turbulence in the main flow through the passage is reduced in an efficient manner, whereby the measurement result is made considerably more reliable. Due to the placing of a measuring device in each conduit between a teat cup and the milk collector, milk coming from a quarter of the udder not involved in a desired measurement is also prevented in effective manner from being able to disturb the measurement.

The design according to the invention displays an appearance similar to that of for instance a petrol filter, while a passage of constant dimensions relative to those of the conduit is maintained in the interior thereof. Simultaneously with feed of milked milk through the passage, "bypass" of a small quantity of the milked milk occurs for performing of the desired measurements thereon. The bypass milk is continually replaced in order to obtain instantaneous measurement results for milk milked at any relevant moment without being affected by milk from previously milked animals.

In a first preferred embodiment a milking installation according to the present invention has at least one of the properties that the measuring device comprises at least one additional sensor for measuring the temperature of milked milk and that the measuring device comprises at least one additional sensor for measuring the composition of milked milk. Each of the two measures, separately or in combination, increases the efficiency of particularly the measuring device in the milking installation by increasing the amount of measurement data that is obtained in reliable manner and serves during milking to monitor a number of aspects which are of importance in dairy farming.

A second embodiment of an installation according to the present invention has the property that the measuring device comprises at least one compensation sensor to compensate for contamination of the measuring device. In addition to turbulence in the milk which has to be subjected to the measurement, contamination by milk remnants can, among other factors, also have a disturbing influence on obtained measurement results. This can be avoided in relatively simple manner by arranging the compensation sensor or compensation sensors.

Other properties of an installation according to the present invention will become apparent in the light of the description hereinbelow of a preferred embodiment thereof. It is further noted once again that the invention also relates to the measuring device individually insofar as this is intended for use in a milking installation with one or more than one of the aspects as discussed above.

The invention will be further elucidated hereinafter with reference to an embodiment thereof. In the drawing:
fig. 1 shows a view of the milking installation according to the present invention; and
fig. 2 shows a partly cut-away perspective view of a measuring device according to the present invention.

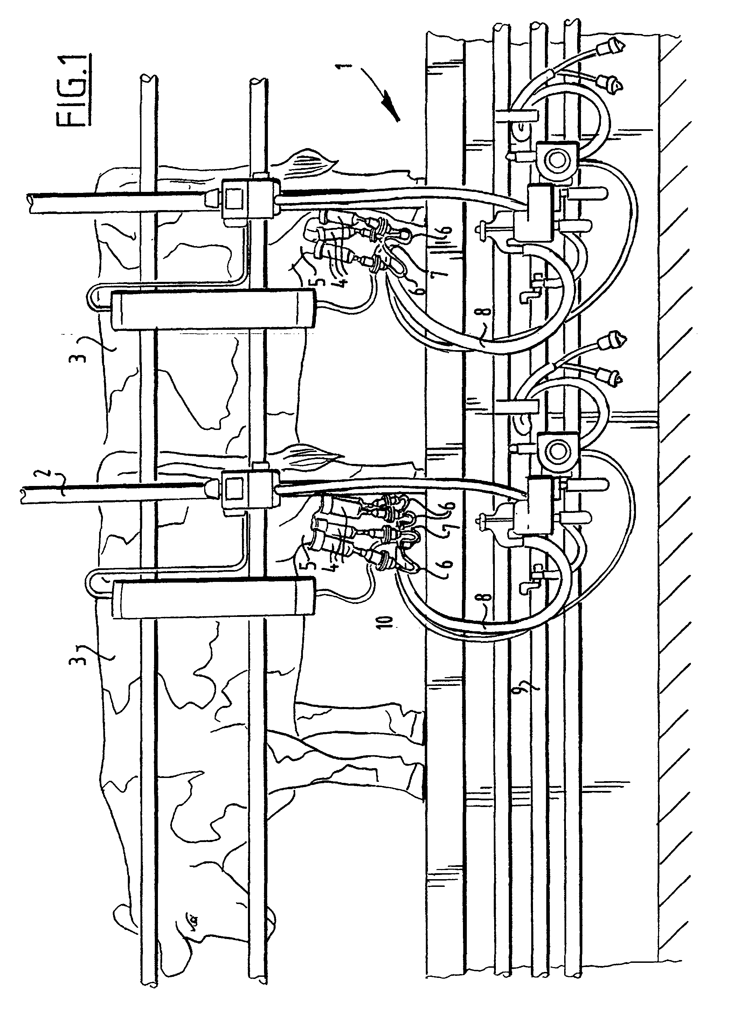

The milking installation 1 shown in fig. 1 comprises a fence 2 for guiding cows 3. The cows are milked with milking installation 1, for which purpose teat cups 4 are arranged on the teats of the udders 5 of cows 3. Teat cups 4 are connected to milk collectors 7 by means of conduits 6. Milk collectors 7 are in turn connected via a hose 8 to a collective drainage conduit 9, via which drainage conduit 9 milked milk is drained to a central container or tank, which is not shown here.

Arranged in conduits 6 between teat cups 4 and milk collectors 7 are measuring devices 10 with which measurements are carried out on milked milk. This substantially constitutes measurement of the conductivity and quality of the milk, this forming an indication as to whether or not there are abnormalities, such as for instance mastitis, which is an undesirable disorder of the cow. Because the measuring devices 10 are each arranged in one of the conduits 6 between the individual teat cups 4 and milk collectors 7, the milk from a quarter of the udder of a cow 3 is subjected to the measurement in reliable manner without this measurement being influenced by milk coming from the other quarters of the udder of the cow. It can therefore be determined for each quarter of the udder 5 of cow 3 whether there is any abnormality such as mastitis. The other components which are not further described are typical in the art and serve inter alia for control of teat cups 4 and connection of measuring devices 10 to a computer (not shown) in which the electrical signals originating from measuring devices 10 are processed in order to carry out the milk condition/milk quality diagnosis. When an abnormality is detected, the milk coming from this quarter of the udder 5 of cow 3 is preferably drained separately or this quarter of the udders 5 of cows 3 is milked separately.

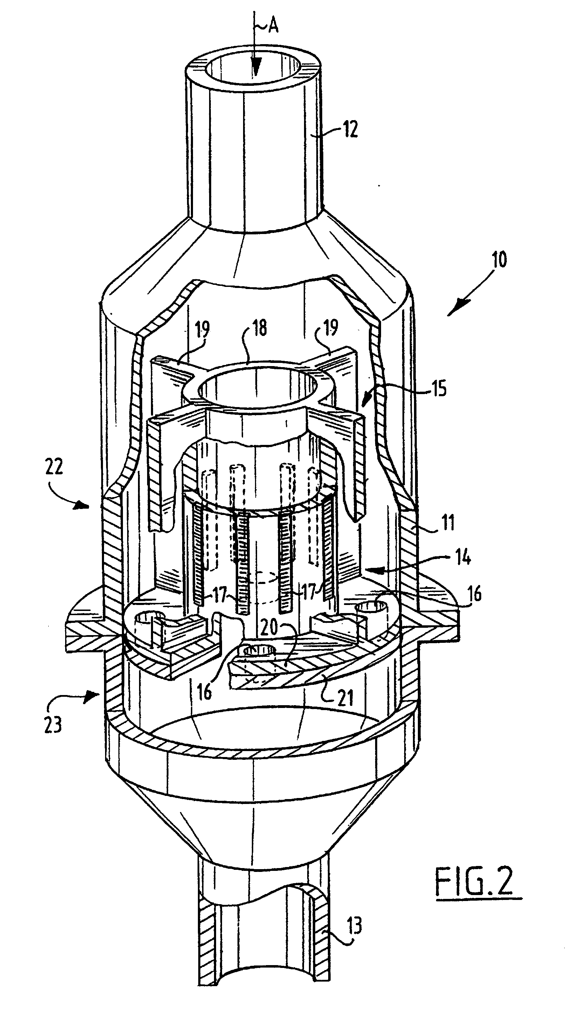

There follows below a further description of one of the measuring devices 10 with reference to fig. 2, which shows one of the measuring devices 10 shown in fig. 1.

The measuring device comprises a housing designed as sleeve 11 having on the infeed side thereof an input designed as input socket 12 and on the outfeed side thereof an output designed as output socket 13. Sleeve 11 herein forms in the interior thereof a widened part relative to the cross-section of conduit 6 available for through-feed of milked milk and connected to input socket 12 and output socket 13. Milk flowing in the direction of arrow A into measuring device 10 follows for the greater part a passage formed by tube 18 arranged in the interior of sleeve 11. Tube 18 is held in place by means of ribs 19 so that it lies in line with both input socket 12 and output socket 13. Tube 18 is also provided with flange 20 at the bottom in the drawing.

Formed between the exterior of tube 18 and the interior of sleeve 11 is measuring chamber 14 into which during use of the measuring device 10 milk flows which does not flow through the tube 18 forming the passage. The milked milk herein enters measuring chamber 14 via an inlet opening designed as lateral passage 15. The speed of movement of the milked milk will decrease markedly here relative to that of the milk flowing through the tube 18 forming the passage as a consequence of the design of outlet openings for draining of milk from measuring chamber 14, which are arranged as relatively small holes 16 in flange 20.

Because the inner diameter of tube 18 corresponds closely with the inner diameter of the conduits 6 in which measuring device 10 is arranged, turbulence possibly occurring close to lateral passage 15 is minimized, wherein sufficient milk nevertheless reaches measuring chamber 14 to perform a reliable measurement. As already stated above, turbulence of the milked milk in measuring chamber 14 is further reduced by making use of relatively small holes 16 as outlet opening out of measuring chamber 14. The milk flows in undisturbed manner such that the measurement result remains optimally reliable.

The measurement is performed using sensors designed as electrodes 17. In the embodiment of the present invention shown here, sensors are provided for a number of separate measurements. In the first instance measurement of the conductivity of milked milk takes place in measuring chamber 14 so as to assess on the basis thereof whether mastitis is present. A sensor is further arranged for measuring the temperature of the milked milk and a sensor is arranged for measuring the composition of the milked milk. Each of the above stated measurement results provides an indication as to the condition of the cow or the quality of the milked milk, such as for instance the fat and protein content.

A sensor is moreover arranged which functions as compensation sensor in order to compensate for contamination of the measuring device and in particular the electrodes therein. Use is made for this purpose of an algorithm which is performed in the above mentioned computer (not shown) with the measurement results originating from the sensors. The measurement results from the compensation sensor can herein be used to compensate for contamination. With a measuring device 10 according to the present invention with sensors designed as electrodes 17 it is therefore possible in reliable manner to monitor any possible health problems of the cow for milking, as well as the composition of the milked milk and the temperature thereof, which also forms an indication per se of at least the condition of the udder 5 of cow 3.

The measuring device 10 shown in fig. 2 which the milk enters at the top in the direction of arrow A is otherwise formed from two parts which connect onto each other, wherein measuring chamber 14 is arranged in the upper half 22 and wherein a space is available in the lower half 23 to bring together again the milk flowing through tube 18 and the milk flowing through measuring chamber 14, this milk exiting into this space through holes 16. Measuring chamber 14 and this space for bringing together the two milk flows are separated by means of flange 20 which forms part of the upper half of measuring device 10 and in which holes 16 are arranged, and a lower flange 21 which forms part of the lower half 23 of measuring device 10 and in which holes (not shown) are also arranged corresponding with holes 16. The measuring device 10 formed in this manner from two components is particularly suitable in the sense that the electrical conductors running to electrodes 17 can be arranged between flange 20 and second flange 21 in order to effect a connection to the computer device (not shown). A simple configuration is moreover provided in this manner, wherein an optimally reliable measurement can be realized.

## Claims

1. Installation for milking livestock (3), comprising:
- a number of teat cups (4) for arranging on teats of udders (5);
- a milk collector (7) for collecting milk coming from each of the teat cups during milking, wherein the teat cups are connected via conduits to the milk collector; and
- at least one measuring device (10) with a sensor for measuring during the milking at least the conductivity of the milked milk,
wherein one measuring device is placed in each of the conduits (6) and **characterized in that** the measuring device comprises a passage for milked milk with a dimension in cross-section which is substantially equal to that of the conduit (6), and wherein the measuring device comprises a housing (22, 23) having an input for connecting to the conduit (6) on the side of the teat cups and an output for connecting to the conduit (6) on the side of the milk collector (7), between which the passage extends, and a measuring chamber (14) which is located outside the passage and in which the sensor or sensors are arranged and which contains an infeed opening (15) connected to the passage close to the input and an outfeed opening (16) connected to the passage close to the output.

2. Installation as claimed in claim 2, **characterized in that** the measuring device comprises at least one compensation sensor to compensate for contamination of the measuring device.

3. Installation as claimed in claim 1, **characterized in that** the measuring device comprises at least one additional sensor for measuring the temperature of milked milk.

4. Installation as claimed in any of the preceeding claims, **characterized in that** the sensor or sensors are arranged between the infeed opening and the outfeed opening.

5. Installation as claimed in claim 4, **characterized in that** the sensor or sensors are electrodes which extend longitudinally thereof between the infeed opening (15) and the outfeed opening (16).

6. Installation as claimed in any of the preceeding claims, **characterized in that** the passage and the outfeed opening debouch close to the output in a mixing chamber located in the housing which is in open communication with the output.

7. Installation as claimed in any one of the preceeding claims, **characterized in that** the sensor or sensors is or are connected to a control which is adapted to carry out a selection on the basis of measurement data from the sensor or sensors so as to feed milked milk through to a production container or to discharge it.

8. Measuring device intended for use in a milking installation as claimed in one or more than one of the foregoing claims.

## Patentansprüche

1. Anlage zum Melken von Vieh (3), aufweisend:
eine Anzahl von Zitzenbechern (4) zum Anordnen auf Zitzen von Eutern (5);
einen Milchkollektor (7) zum Sammeln von Milch, die von jedem der Zitzenbecher während des Melkvorgangs kommt, wobei die Zitzenbecher über Leitungen mit dem Milchkollektor verbunden sind; und
wenigstens eine Meßvorrichtung (10) mit einem Sensor zum Messen während des Melkvorgangs von wenigstens der Leitfähigkeit der gemolkenen Milch,
wobei eine Meßvorrichtung in jeder der Leitungen (6) angeordnet ist, und **dadurch gekennzeichnet, daß** die Meßvorrichtung einen Durchlaß für gemolkene Milch aufweist, mit einer Querschnittsabmessung, die im wesentlichen gleich zu derjenigen der Leitung (6) ist, und wobei die Meßvorrichtung ein Gehäuse (22, 23) aufweist, das einen Einlaß zum Verbinden mit der Leitung (6) auf der Seite der Zitzenbecher und einen Auslaß zum Verbinden der Leitung (6) auf der Seite des Milchkollektors (7) besitzt, zwischen denen sich der Durchlaß erstreckt, und eine Meßkammer (14), die außerhalb des Durchlasses angeordnet ist, und in der der Sensor oder die Sensoren angeordnet ist/sind, und der eine Zuführöffnung (15) enthält, die mit dem Durchlaß nahe an dem Einlaß verbunden ist, und eine Auslaßöffnung (16), die mit dem Durchlaß nahe an dem Auslaß verbunden ist.

2. Anlage gemäß Anspruch 1, **dadurch gekennzeichnet, daß** die Meßvorrichtung wenigstens einen Kompensationssensor aufweist, um eine Kontamination der Meßvorrichtung zu kompensieren.

3. Anlage gemäß Anspruch 1, **dadurch gekennzeichnet, daß** die Meßvorrichtung wenigstens einen zusätzlichen Sensor zur Messung der Temperatur der gemolkenen Milch aufweist.

4. Anlage gemäß einem der vorhergehenden Ansprüche, **dadurch gekennzeichnet, daß** der Sensor oder die Sensoren zwischen der Zuführöffnung und der Auslaßöffnung angeordnet ist/sind.

5. Anlage gemäß Anspruch 4, **dadurch gekennzeichnet, daß** der Sensor oder die Sensoren Elektroden sind, die sich längs davon zwischen der Zuführöffnung (15) und der Auslaßöffnung (16) erstrecken.

6. Anlage gemäß einem der vorhergehenden Ansprüche, **dadurch gekennzeichnet, daß** der Durchlaß und die Ausführöffnung nahe an dem Auslaß in einer Mischkammer, die in dem Gehäuse angeordnet ist, die in einer offenen Verbindung mit dem Auslaß steht, einmünden.

7. Anlage gemäß einem der vorhergehenden Ansprüche, **dadurch gekennzeichnet, daß** der Sensor oder die Sensoren mit einer Steuerung verbunden ist oder sind, die dazu angepaßt ist, eine Auswahl auf der Grundlage der Meßdaten von dem Sensor oder den Sensoren auszuführen, um die gemolkene Milch hindurch zu einem Produktionsbehälter zu führen, oder um sie auszustoßen.

8. Meßvorrichtung, die zur Verwendung in einer Melkanlage gemäß einem oder mehr als einem der vorhergehenden Ansprüche gedacht ist.

## Revendications

1. Installation pour traire du bétail (3) comprenant :
- un nombre de gobelets trayeurs (4) pour être agencés sur les trayons des mamelles (5) ;
- un collecteur de lait (7) destiné à collecter le lait venant de chacun des gobelets trayeurs pendant la traite, dans laquelle les gobelets trayeurs sont reliés par l'intermédiaire de conduites au collecteur de lait ; et
- au moins un dispositif de mesure (10) avec un détecteur destiné à mesurer pendant la traite au moins la conductivité du lait trait, dans laquelle un dispositif de mesure est placé dans chacune des conduites (6) et **caractérisé en ce que** le dispositif de mesure comprend un passage pour le lait trait avec une dimension en coupe transversale qui est sensiblement égale à celle de la conduite (6) et dans laquelle le dispositif de mesure comprend un logement (22, 23) présentant une entrée pour être relié à la conduite (6) du côté des gobelets trayeurs et une sortie pour être relié à la conduite (6) du côté du collecteur de lait (7), entre lesquelles le passage s'étend, et une chambre de mesure (14) qui est située en dehors du passage et dans laquelle le détecteur ou les détecteurs sont agencés et qui comprend une ouverture d'entrée (15) reliée au passage proche de l'entrée et une ouverture de sortie (16) reliée au passage proche de la sortie.

2. Installation selon la revendication 1, **caractérisée en ce que** le dispositif de mesure comprend au moins un détecteur de compensation pour compenser la contamination du dispositif de mesure.

3. Installation selon la revendication 1, **caractérisée en ce que** le dispositif de mesure comprend au moins un détecteur supplémentaire pour mesurer la température du lait trait.

4. Installation selon l'une quelconque des revendications précédentes, **caractérisée en ce que** le détecteur ou les détecteurs sont agencés entre l'ouverture d'entrée et l'ouverture de sortie.

5. Installation selon la revendication 4, **caractérisée en ce que** le détecteur ou les détecteurs sont des électrodes qui s'étendent longitudinalement entre l'ouverture d'entrée (15) et l'ouverture de sortie (16).

6. Installation selon l'une quelconque des revendications précédentes, **caractérisée en ce que** le passage et l'ouverture de sortie débouchent proche de la sortie dans une chambre de mélange située dans le logement qui est en communication ouverte avec la sortie.

7. Installation selon l'une quelconque des revendications précédentes, **caractérisée en ce que** le détecteur ou les détecteurs est ou sont connecté(s) à une commande qui est adaptée pour exécuter une sélection sur la base des données de mesure depuis le détecteur ou les détecteurs de manière à introduire du lait trait à travers un conteneur de production ou à le décharger.

8. Dispositif de mesure destiné à être utilisé dans une installation de traite selon l'une ou plusieurs des revendications précédentes.
